(19) Europäisches Patentamt
European Patent Office
Office européen des brevets

(11) EP 2 966 887 A1

(12) EUROPEAN PATENT APPLICATION
published in accordance with Art. 153(4) EPC

(43) Date of publication:
13.01.2016 Bulletin 2016/02

(51) Int Cl.:
H04W 12/10 (2009.01)    H04W 84/18 (2009.01)
H04L 29/14 (2006.01)

(21) Application number: 14775885.8

(22) Date of filing: 28.03.2014

(86) International application number:
PCT/CN2014/074317

(87) International publication number:
WO 2014/154178 (02.10.2014 Gazette 2014/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.03.2013 CN 201310104795

(71) Applicant: Huawei Technologies Co., Ltd.
Longgang District
Shenzhen, Guangdong 518129 (CN)

(72) Inventors:
• LIU, Pei
Shenzhen
Guangdong 518129 (CN)
• WANG, Yibo
Beijing 100876 (CN)
• ZOU, Weixia
Beijing 100876 (CN)

(74) Representative: Epping - Hermann - Fischer
Patentanwaltsgesellschaft mbH
Schloßschmidstraße 5
80639 München (DE)

(54) DATA PROCESSING METHOD, COORDINATOR, AND NODE DEVICE

(57) Embodiments of the present invention provide a data processing method, a coordinator, and a node device. The coordinator receives a data frame sent by the node device, where the data frame includes service data; the coordinator determines whether the service data is within a set data confidence interval; and if the coordinator determines that the service data is beyond the data confidence interval, the coordinator sends a questioned-data frame to the node device, where the questioned-data frame carries the service data, so that the node device confirms correctness of the service data.

According to the embodiments of the present invention, the coordinator first determines whether the received service data is within the data confidence interval, and if the service data is beyond the data confidence interval, returns the service data to the node device for confirmation. Compared with a manner in the prior art in which a coordinator directly accepts service data, the data processing method provided in the embodiments of the present invention meets requirements of a system on data reliability and accuracy.

```
┌────────────────────────────────────────────────────────────┐
│ A coordinator receives a data frame sent by a node device,   │── S110
│ where the data frame includes service data                   │
└────────────────────────────────────────────────────────────┘
                            │
                            ▼
┌────────────────────────────────────────────────────────────┐
│ The coordinator determines whether the service data is       │── S120
│ within a set data confidence interval                        │
└────────────────────────────────────────────────────────────┘
                            │
                            ▼
┌────────────────────────────────────────────────────────────┐
│ If the coordinator determines that the service data is beyond │
│ the data confidence interval, the coordinator sends a         │── S130
│ questioned-data frame to the node device, where the           │
│ questioned-data frame carries the service data, so            │
│ that the node device determines correctness of the service data│
└────────────────────────────────────────────────────────────┘
```

FIG. 1

EP 2 966 887 A1

## Description

This application claims priority to Chinese Patent Application No. 201310104795.6, filed with the Chinese Patent Office on March 28, 2013 and entitled "DATA PROCESSING METHOD, COORDINATOR, AND NODE DEVICE", which is incorporated herein by reference in its entirety.

## TECHNICAL FIELD

Embodiments of the present invention relate to communications technologies, and in particular, to a data processing method, a coordinator, and a node device.

## BACKGROUND

A main function of a wireless sensor network, such as a wireless intelligent meter reading system, based on a wireless personal area network (Wireless Personal Area Network, WPAN for short) transmission technology, is collecting data on usage of factories and households in terms of water, electricity, gas, heat, and the like and performing a related charging operation on a basis of this data and other auxiliary information.

In the prior art, a node device on a wireless personal area network generally adds data to a data frame, and sends the data frame to a coordinator of the wireless personal area network, and after receiving the data frame carrying the data, the coordinator returns, to the node device, a confirmation frame to confirm success in receiving.

However, in the prior art, if there is an error in data sent by a node device to a coordinator, requirements of a system on data reliability and accuracy cannot be met.

## SUMMARY

Embodiments of the present invention provide a data processing method, a coordinator, and a node device, so as to improve data reliability and accuracy.

According to a first aspect, an embodiment of the present invention provides a data processing method, including:

receiving, by a coordinator, a data frame sent by a node device, where the data frame includes service data; and

determining, by the coordinator, whether the service data is within a set data confidence interval; and if the coordinator determines that the service data is beyond the data confidence interval, sending, by the coordinator, a questioned-data frame to the node device, where the questioned-data frame carries the service data, so that the node device confirms correctness of the service data.

In a first possible implementation manner of the first aspect, before the determining, by the coordinator, whether the service data is within a set data confidence interval, the method further includes: determining, by the coordinator, the data confidence interval according to historical data having a service type the same as a service type of the service data.

According to the first possible implementation manner of the first aspect, in a second possible implementation manner of the first aspect, the determining, by the coordinator, the data confidence interval according to historical data having a service type the same as a service type of the service data includes: extracting, by the coordinator, multiple pieces of historical data, corresponding to a transmission moment in a transmission cycle in which the service data is, within multiple historical transmission cycles preceding the transmission cycle in which the service data is; and determining, by the coordinator, the data confidence interval according to $[X-a \times \sigma, X+a \times \sigma]$, where $X$ is a mean of the multiple pieces of historical data, $\sigma$ is a standard deviation of the multiple pieces of historical data, and $a$ is a tolerance coefficient.

According to the first aspect or either of the foregoing two possible implementation manners of the first aspect, in a third possible implementation manner of the first aspect, after the sending, by the coordinator, a questioned-data frame to the node device, the method further includes: receiving, by the coordinator, a data questioning rejected confirmation frame sent by the node device, where the data questioning rejected confirmation frame is used for indicating that the service data is correct; or receiving, by the coordinator, a data questioning accepted confirmation frame sent by the node device, where the data questioning accepted confirmation frame is used for indicating that the service data is erroneous; and receiving, by the coordinator, an updated data frame sent by the node device, where the updated data frame includes updated service data.

According to a second aspect, an embodiment of the present invention provides another data processing method, including:

acquiring, by a node device, service data; sending, by the node device, a data frame to a coordinator, where the data frame includes the service data, so that the coordinator determines whether the service data is within a data confidence interval; receiving, by the node device, a questioned-data frame sent by the coordinator, where the questioned-data frame carries the service data; and confirming, by the node device, correctness of the service data.

In a first possible implementation manner of the second aspect, the confirming, by the node device, correctness of the service data includes: determining, by the node device by means of comparison, whether the service data in the questioned-data frame is the same as the service data in the data frame sent to the coordinator;

and if the service data in the questioned-data frame is different from the service data in the data frame sent to the coordinator, resending the service data to the coordinator; or if the service data in the questioned-data frame is the same as the service data in the data frame sent to the coordinator, verifying, with a service data sensing apparatus, the correctness of the service data.

According to a third aspect, an embodiment of the present invention provides a coordinator, including:

a receiving module, configured to receive a data frame sent by a node device, where the data frame includes service data; a judging module, configured to determine whether the service data is within a set data confidence interval; and a sending module, configured to send, after the judging module determines that the service data is beyond the data confidence interval, a questioned-data frame to the node device, where the questioned-data frame carries the service data, so that the node device confirms correctness of the service data.

In a first possible implementation manner of the third aspect, the coordinator further includes: a determining module, configured to determine the data confidence interval according to historical data having a service type the same as a service type of the service data.

According to the first possible implementation manner of the third aspect, in a second possible implementation manner of the third aspect, the determining module is specifically configured to: extract multiple pieces of historical data, corresponding to a transmission moment in a transmission cycle in which the service data is, within multiple historical transmission cycles preceding the transmission cycle in which the service data is; and determine the data confidence interval according to [$X-a\times\sigma,X+a\times\sigma$], where $X$ is a mean of the multiple pieces of historical data, $\sigma$ is a standard deviation of the multiple pieces of historical data, and $a$ is a tolerance coefficient.

According to the third aspect or either of the foregoing two possible implementation manners of the third aspect, in a third possible implementation manner of the third aspect, the receiving module is further configured to: receive a data questioning rejected confirmation frame sent by the node device, where the data questioning rejected confirmation frame is used for indicating that the service data is correct; or receive a data questioning accepted confirmation frame sent by the node device, where the data questioning accepted confirmation frame is used for indicating that the service data is erroneous; and receive, by the coordinator, an updated data frame sent by the node device, where the updated data frame includes updated service data.

According to a fourth aspect, an embodiment of the present invention provides a node device, including:

an acquiring module, configured to acquire service data; a sending module, configured to send a data frame to a coordinator, where the data frame includes the service data, so that the coordinator determines whether the service data is within a data confidence interval; a receiving module, configured to receive a questioned-data frame sent by the coordinator, where the questioned-data frame carries the service data; and a confirmation module, configured to confirm correctness of the service data.

In a first possible implementation manner of the fourth aspect, the confirmation module is specifically configured to: determine, by means of comparison, whether the service data in the questioned-data frame is the same as the service data in the data frame sent to the coordinator; and if the service data in the questioned-data frame is different from the service data in the data frame sent to the coordinator, resend the service data to the coordinator; or if the service data in the questioned-data frame is the same as the service data in the data frame sent to the coordinator, verify, with a service data sensing apparatus, the correctness of the service data.

According to the data processing method, the coordinator, and the node device that are provided in the embodiments of the present invention, the coordinator first determines whether received service data is within a data confidence interval; and if the service data is beyond the data confidence interval, returns the service data to the node device for confirmation. Compared with a manner in the prior art in which a coordinator directly accepts service data, the data processing method provided in the embodiments of the present invention meets requirements of a system on data reliability and accuracy.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a flowchart of Embodiment 1 of a data processing method according to the present invention;

FIG. 2 is a flowchart of Embodiment 2 of a data processing method according to the present invention;

FIG. 3 is a flowchart of Embodiment 3 of a data processing method according to the present invention;

FIG. 4 is a signaling flowchart of Embodiment 4 of a data processing method according to the present invention;

FIG. 5A and FIG. 5B are an overall flowchart of Embodiment 5 of a data processing method according to the present invention;

FIG. 6 is a schematic structural diagram of Embodiment 1 of a coordinator according to the present invention;

FIG. 7 is a schematic structural diagram of Embodiment 2 of a coordinator according to the present invention;

FIG. 8 is a schematic structural diagram of Embodiment 1 of a node device according to the present invention;

FIG. 9 is a schematic structural diagram of Embodiment 3 of a coordinator according to the present invention; and

FIG. 10 is a schematic structural diagram of Embodiment 2 of a node device according to the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

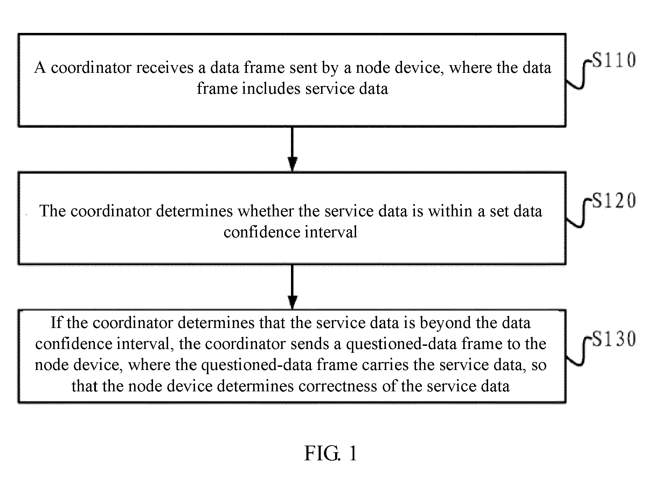

FIG. 1 is a flowchart of Embodiment 1 of a data processing method according to the present invention. As shown in FIG. 1, the data processing method provided in this embodiment may include:

S110: A coordinator receives a data frame sent by a node device, where the data frame includes service data.

Specifically, the service data specifically may be data on household water consumption, household power consumption, or the like, the service data may be acquired and provided for the node device by a data sensing apparatus, and the node device adds the service data to the data frame, and sends the data frame to the coordinator. After receiving the data frame sent by the node device, the coordinator may return a common confirmation frame to the coordinator to indicate that the data frame has been received.

S120: The coordinator determines whether the service data is within a set data confidence interval.

The data confidence interval may be a fixed interval preset in the coordinator, and for example, is provided by a service operator or a personal area network manager. The data confidence interval may also be dynamically set by the coordinator according to historical data or another influence factor each time after the coordinator acquires service data.

S130: If the coordinator determines that the service data is beyond the data confidence interval, the coordinator sends a questioned-data frame to the node device, where the questioned-data frame carries the service data, so that the node device confirms correctness of the service data.

If the coordinator determines that the service data is beyond the data confidence interval, the coordinator does not directly accept the service data, but may add the service data to the questioned-data frame, and send the questioned-data frame to the node device, so that the node device confirms the service data.

According to the data processing method provided in this embodiment, a coordinator first determines whether received service data is within a data confidence interval, and if the service data is beyond the data confidence interval, returns the service data to a node device for confirmation. Compared with a manner in the prior art in which a coordinator directly accepts service data, the data processing method provided in this embodiment of the present invention meets requirements of a system on data reliability and accuracy.

Further, before the determining, by the coordinator, whether the service data is within a set data confidence interval, the method further includes: determining, by the coordinator, the data confidence interval according to historical data having a service type the same as a service type of the service data.

The determining, by the coordinator, the data confidence interval according to historical data having a service type the same as a service type of the service data includes: extracting, by the coordinator, multiple pieces of historical data, corresponding to a transmission moment in a transmission cycle in which the service data is, within multiple historical transmission cycles preceding the transmission cycle in which the service data is; and determining, by the coordinator, the data confidence interval according to $[X\text{-}a\times\sigma, X\text{+}a\times\sigma]$, where $X$ is a mean of the multiple pieces of historical data, $\sigma$ is a standard deviation of the multiple pieces of historical data, and $a$ is a tolerance coefficient.

Specifically, the method for the determining, by the coordinator, the data confidence interval according to historical data having a service type the same as a service type of the service data may include:

assuming that a transmission cycle for transmission data of the node device is set to T, receiving, by the coordinator within the $n^{th}$ using cycle, m pieces of service data, which are $X_{n,1}$, $X_{n,2}$, ..., $X_{n,m-1}$, and

$X_{n,m}$, separately sent by the node device at m moments; and assuming that the coordinator receives a piece of new service data $X_{n+1,m}$ at the $m^{th}$ moment of the $(n+1)^{th}$ using cycle, extracting, by the coordinator, n pieces of service data, which are $X_{1,m}$, $X_{2,m}$, ..., $X_{n-1,m}$, and $X_{n,m}$, received by the node device at the $m^{th}$ moments of previous n transmission cycles, where a mean of the n pieces of data is

$$X = \left( \sum_{i=1}^{n} X_{i,m} \right) \Big/ n \ ,$$

and a standard deviation of the n pieces of data is

$$\sigma = \sqrt{\left[ \sum_{i=1}^{n} \left( X_{i,m} - X \right)^2 \right] \Big/ n} \ .$$

A data confidence interval of the service data $X_{n+1,m}$ may be determined as $[X-a \times \sigma, X+a \times \sigma]$, where the tolerance coefficient $a$ is a positive integer and may be determined according to a degree of tolerance of a system for the service data deviation mean X. A larger value of $a$ results in a higher probability that the service data $X_{n+1,m}$ falls within the data confidence interval.

One manner of dynamically determining the data confidence interval of the service data is described above, and certainly, the data confidence interval of the service data may also be determined in another manner, for example, a mean X1 of all pieces of historical data having a service type the same as a service type of the service data is determined, and then, the data confidence interval of the service data is determined as $[X1-0.2X1, X1+0.2X1]$. In this embodiment of the present invention, a specific manner of determining the data confidence interval of the service data is not limited.

Further, after the coordinator sends the questioned-data frame to the node device, the method further includes: receiving, by the coordinator, a data questioning rejected confirmation frame sent by the node device, where the data questioning rejected confirmation frame is used for indicating that the service data is correct; or receiving, by the coordinator, a data questioning accepted confirmation frame sent by the node device, where the data questioning accepted confirmation frame is used for indicating that the service data is erroneous; and receiving, by the coordinator, an updated data frame sent by the node device, where the updated data frame includes updated service data.

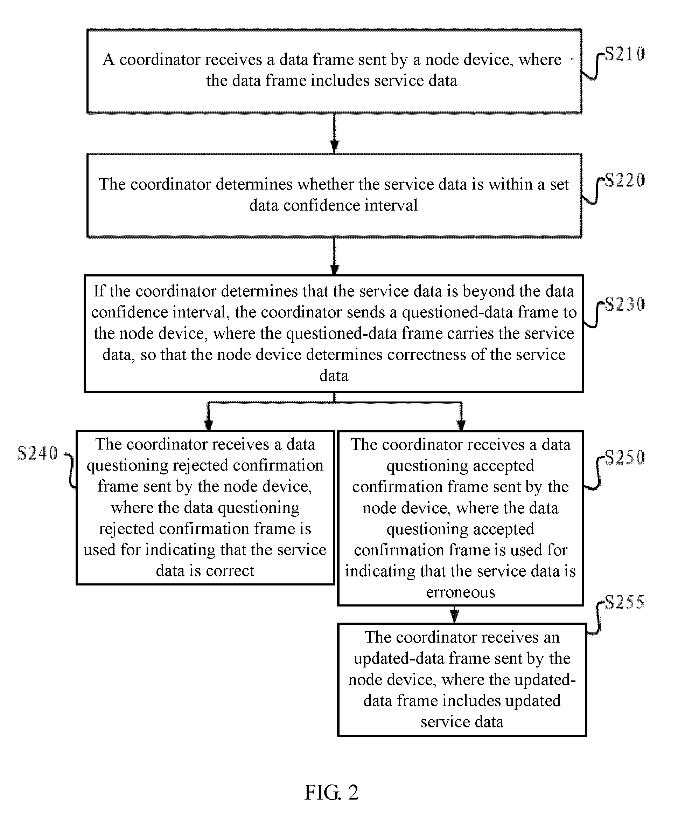

FIG. 2 is a flowchart of Embodiment 2 of a data processing method according to the present invention. As shown in FIG. 2, the data processing method provided in this embodiment may include:

S210 to S230 similar to S110 to S130 in the embodiment shown in FIG. 1 are not repeatedly described herein.

S240: The coordinator receives a data questioning rejected confirmation frame sent by the node device, where the data questioning rejected confirmation frame is used for indicating that the service data is correct.

After the coordinator sends the questioned-data frame to the node device, the node device sends the data questioning rejected confirmation frame to the coordinator if the node device confirms that the service data is correct; and after receiving the data questioning rejected confirmation frame, the coordinator accepts the service data, and returns a data accepted confirmation frame to the node device.

S250: The coordinator receives a data questioning accepted confirmation frame sent by the node device, where the data questioning accepted confirmation frame is used for indicating that the service data is erroneous.

After the coordinator sends the questioned-data frame to the node device, the node device sends the data questioning accepted confirmation frame to the coordinator if the node device verifies that the service data is erroneous.

S255: The coordinator receives an updated data frame sent by the node device, where the updated data frame includes updated service data.

After verifying that the service data is erroneous, the node device re-acquires the updated service data, adds the updated service data to the updated data frame, and sends the updated data frame to the coordinator. After receiving the updated service data, the coordinator still processes the updated service data by means of S220 and the subsequent steps.

According to the data processing method provided in this embodiment, a coordinator may determine a data confidence interval of service data dynamically according to historical data, determine whether the service data is within the data confidence interval, and if the service data is beyond the data confidence interval, return the service data to a node device for confirmation. Compared with a manner in the prior art in which a coordinator directly accepts service data, the data processing method provided in this embodiment of the present invention meets requirements of a system on data reliability and accuracy.

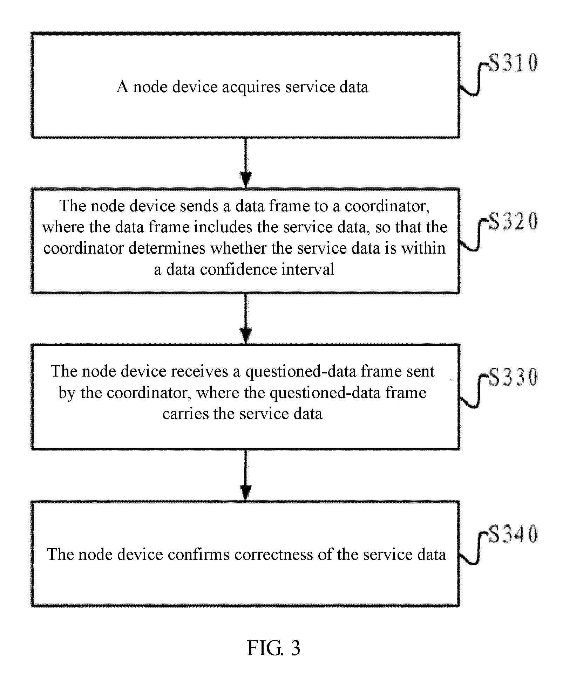

FIG. 3 is a flowchart of Embodiment 3 of a data processing method according to the present invention. As shown in FIG. 3, the data processing method provided in this embodiment may include:

S310: Anode device acquires service data.

The service data specifically may be data on household water consumption, household power consumption, or the like, and the service data may be acquired and provided for the node device by a data sensing apparatus.

> S320: The node device sends a data frame to a coordinator, where the data frame includes the service data, so that the coordinator determines whether the service data is within a data confidence interval.

The node device then adds the service data to the data frame, and sends the data frame to the coordinator. After receiving the data frame sent by the node device, the coordinator may return a common confirmation frame to the coordinator to indicate that the data frame has been received. A manner of determining whether the service data is within the data confidence interval after the coordinator receives the service data is similar to that in the embodiment shown in FIG. 1, and details are not repeatedly described herein again.

> S330: The node device receives a questioned-data frame sent by the coordinator, where the questioned-data frame carries the service data.

In a case in which the coordinator determines that the service data is beyond the data confidence interval, the coordinator adds the service data to the questioned-data frame, and sends the questioned-data frame to the node device.

> S340: The node device confirms correctness of the service data.

After receiving the questioned-data frame sent by the coordinator, the node device confirms whether the service data carried in the questioned-data frame is correct. Specifically:

The confirming, by the node device, correctness of the service data includes:

> determining, by the node device by means of comparison, whether the service data in the questioned-data frame is the same as the service data in the data frame sent to the coordinator; and if the service data in the questioned-data frame is different from the service data in the data frame sent to the coordinator, resending the service data to the coordinator; or if the service data in the questioned-data frame is the same as the service data in the data frame sent to the coordinator, verifying, with a service data sensing apparatus, the correctness of the service data.

Specifically, the node device first determines, by means of comparison, whether the service data returned in the questioned-data frame by the coordinator is the same as the service data that has been sent in the data frame to the coordinator by the node device before, and if the service data returned in the questioned-data frame by the coordinator is different from the service data that has been sent in the data frame to the coordinator by the node device before, an error may be caused to the service data in a process of data transmission between the node device and the coordinator. In the situation, the node device may return a data questioning rejected confirmation frame to the coordinator, so as to notify the coordinator that the service data transmitted through the data frame is correct, and then, resend, to the coordinator, the service data that has been transmitted through the data frame before; the node device may directly add the service data in the data frame to a data questioning rejected confirmation frame, and send the data questioning rejected confirmation frame to the coordinator again; or the node device may not send a data questioning rejected confirmation frame to the coordinator, but directly sends, to the coordinator, the service data that has been transmitted through the data frame before. In this embodiment of the present invention, no limitation is imposed on a manner of resending the service data to the coordinator.

If the service data that is questioned and is received by the node device is consistent with the service data that has been sent through the data frame to the coordinator by the node device before, the node device may further verify, with the service data sensing apparatus, the correctness of the service data. For example, whether service data read by the service data sensing apparatus is correct is confirmed by using an application layer. If it is verified that the service data is erroneous, the node device may send a data questioning accepted confirmation frame to the coordinator, and send, to the coordinator, an updated data frame including updated service data.

According to the data processing method provided in this embodiment, a coordinator may determine a data confidence interval of service data dynamically according to historical data, determine whether the service data is within the data confidence interval, and if the service data is beyond the data confidence interval, return the service data to a node device for confirmation. Compared with a manner in the prior art in which a coordinator directly accepts service data, the data processing method provided in this embodiment of the present invention meets requirements of a system on data reliability and accuracy.

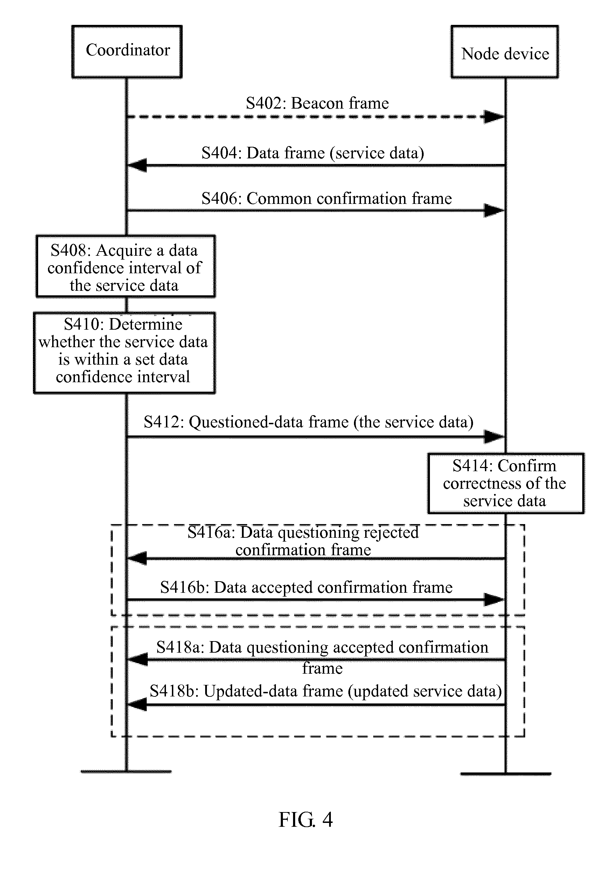

FIG. 4 is a signaling flowchart of Embodiment 4 of a data processing method according to the present invention. As shown in FIG. 4, the data processing method provided in this embodiment of the present invention is described by means of signaling interaction between a coordinator and a node device. The data processing method in this embodiment may include:

> S402: Optionally, a coordinator may first send a beacon frame to a node device, so as to instruct the node device to send service data by using a superframe corresponding to the beacon frame.

S404: The node device sends a data frame to the coordinator, where the data frame includes the service data, the service data specifically may be data on household water consumption, household power consumption, or the like, and the service data may be acquired and provided for the node device by a data sensing apparatus.

S406: The coordinator returns a common confirmation frame to the node device to confirm that the data frame has been received.

It should be noted that, the data frame in S404 may be marked as a charging data frame, where the charging data frame includes charging service data; and because requirements of a charging service on transmission reliability and accuracy of the charging service data are higher than those of a common service, the coordinator may proceed with a subsequent step only after receiving the charging data frame, thereby saving signaling overheads of a system.

S408: Acquire a data confidence interval of the service data. A specific method is similar to that in the embodiment shown in FIG. 1, and details are not repeatedly described.

S410: The coordinator determines whether the service data is within a set data confidence interval.

S412: If the coordinator determines that the service data is beyond the data confidence interval, the coordinator sends a questioned-data frame to the node device, where the questioned-data frame carries the service data.

S414: The node device confirms correctness of the service data.

S416a: The node device sends a data questioning rejected confirmation frame to the coordinator if the node device confirms that the service data is correct.

S416b: The coordinator confirms acceptance of the service data, and sends a data accepted confirmation frame to the node device.

S418a: The node device sends a data questioning accepted confirmation frame to the coordinator if the node device confirms that the service data is erroneous.

S418b: The node device sends an updated data frame to the coordinator, where the updated data frame includes updated service data.

It should be noted that, the data frames and the confirmation frames in this embodiment of the present invention all may be achieved by modifying a format of an existing data frame and a format of an existing confirmation frame. For example, the following may be separately acquired by modifying a data frame type field value in a frame control field of an existing data frame: "a non-charging data frame" (the data frame type field value may be set to 00), "a charging data frame" (the data frame type field value may be set to 01), "a questioned-data frame" (the data frame type field value may be set to 10), and "an updated data frame" (the data frame type field value may be set to 11). The following may be separately acquired by modifying a confirmation frame type field value in a frame control field of an existing confirmation frame: "a common confirmation frame" (the confirmation frame type field value may be set to 00), "a data accepted confirmation frame" (the confirmation frame type field value may be set to 01), "a data questioning rejected confirmation frame" (the confirmation frame type field value may be set to 10), and "a data questioning accepted confirmation frame" (the confirmation frame type field value may be set to 11). No limitation is imposed on forms of the data frames and forms of the confirmation frames in this embodiment of the present invention.

According to the data processing method provided in this embodiment, a coordinator may determine a data confidence interval of service data dynamically according to historical data, determine whether the service data is within the data confidence interval, and if the service data is beyond the data confidence interval, return the service data to a node device for confirmation. Compared with a manner in the prior art in which a coordinator directly accepts service data, the data processing method provided in this embodiment of the present invention meets requirements of a system on data reliability and accuracy.

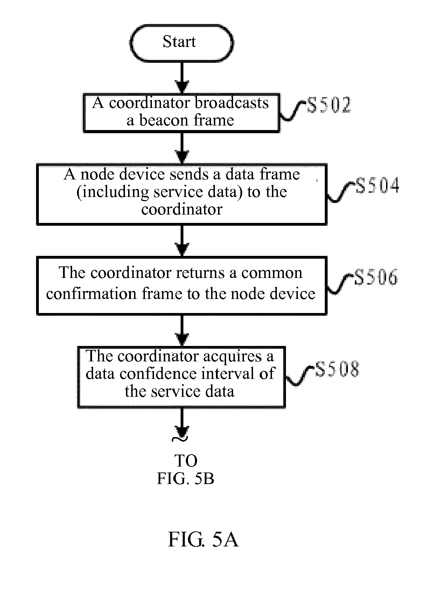

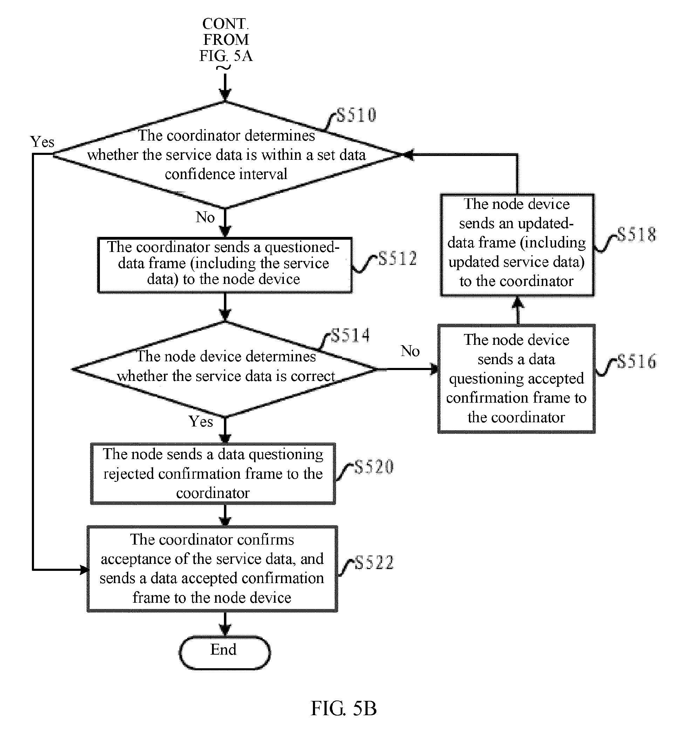

FIG. 5A and FIG. 5B are an overall flowchart of Embodiment 5 of a data processing method according to the present invention. As shown in FIG. 5A and FIG. 5B, the data processing method in this embodiment may include:

S502: Optionally, a coordinator broadcasts a beacon frame, so as to instruct a node device to send service data by using a superframe corresponding to the beacon frame.

S504: The node device sends a data frame to the coordinator, where the data frame includes the service data, the service data specifically may be data on household water consumption, household power consumption, or the like, and the service data may be acquired and provided for the node device by a data sensing apparatus.

S506: The coordinator returns a common confirmation frame to the node device to confirm that the data frame has been received.

It should be noted that, the data frame in S504 may be marked as a charging data frame, where the charging data frame includes charging service data; and because requirements of a charging service on transmission reliability and accuracy of the charging service data are higher than those of a common service, the coordinator may proceed with a subsequent step only after receiving the charging data frame, thereby saving signaling overheads of a system.

S508: The coordinator acquires a data confidence interval of the service data. A specific method is similar to that in the embodiment shown in FIG. 1, and details are not repeatedly described.

S510: The coordinator determines whether the service data is within a set data confidence interval; and if yes, performs S522, or if not, performs S512.

S512: The coordinator sends a questioned-data frame to the node device, where the questioned-data frame carries the service data.

S514: The node device determines whether the service data is correct; and if the service data is correct, performs S520, or if the service data is erroneous, performs S516.

S516: The node device sends a data questioning accepted confirmation frame to the coordinator.

S518: The node device sends an updated data frame to the coordinator, where the updated data frame includes updated service data.

S520: The node device sends a data questioning rejected confirmation frame to the coordinator in the step when the node device determines, in S514, that the service data is correct.

S522: The coordinator confirms acceptance of the service data, and sends a data accepted confirmation frame to the node device.

According to the data processing method provided in this embodiment, a coordinator may determine a data confidence interval of service data dynamically according to historical data, determine whether the service data is within the data confidence interval, and if the service data is beyond the data confidence interval, return the service data to a node device for confirmation. Compared with a manner in the prior art in which a coordinator directly accepts service data, the data processing method provided in this embodiment of the present invention meets requirements of a system on data reliability and accuracy.

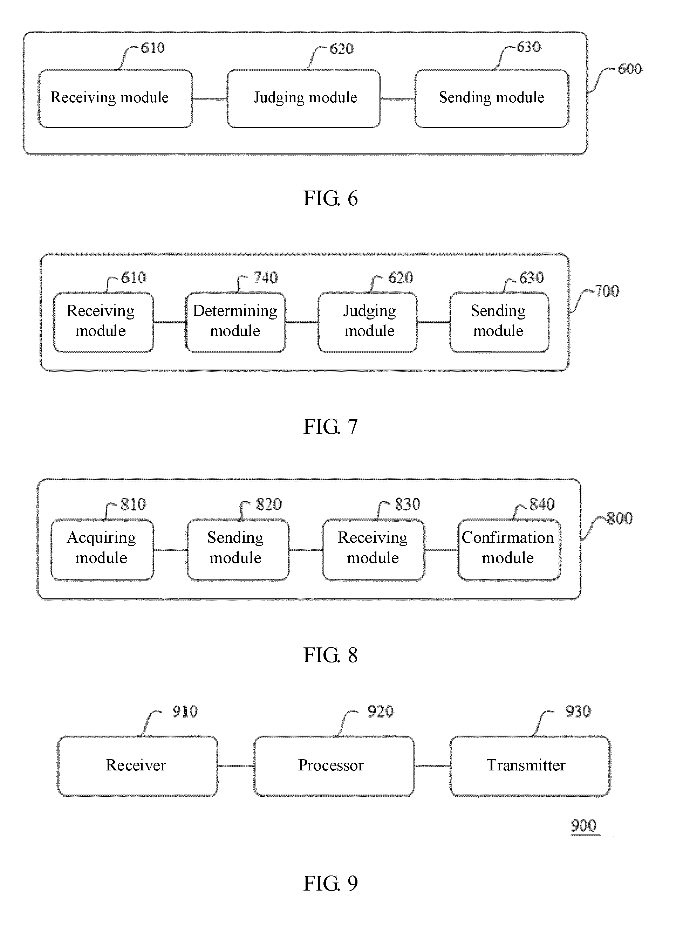

FIG. 6 is a schematic structural diagram of Embodiment 1 of a coordinator according to the present invention. As shown in FIG. 6, the coordinator 600 provided in this embodiment may include: a receiving module 610, a judging module 620, and a sending module 630.

The receiving module 610 is configured to receive a data frame sent by a node device, where the data frame includes service data.

The judging module 620 is configured to determine whether the service data is within a set data confidence interval.

The sending module 630 is configured to send, after the judging module determines that the service data is beyond the data confidence interval, a questioned-data frame to the node device, where the questioned-data frame carries the service data, so that the node device confirms correctness of the service data.

The coordinator 600 provided in this embodiment may be configured to execute the technical solution of the method embodiment shown in FIG. 1. An implementation principle and a technical effect of the coordinator 600 are similar to those of the technical solution, and details are not repeatedly described herein again.

FIG. 7 is a schematic structural diagram of Embodiment 2 of a coordinator according to the present invention. As shown in FIG. 7, based on the embodiment shown in FIG. 6, the coordinator 700 provided in this embodiment may further include a determining module 740.

The determining module 740 is configured to determine the data confidence interval according to historical data having a service type the same as a service type of the service data.

Further, the determining module 740 is specifically configured to: extract multiple pieces of historical data, corresponding to a transmission moment in a transmission cycle in which the service data is, within multiple historical transmission cycles preceding the transmission cycle in which the service data is; and determine the data confidence interval according to $[X-a\times\sigma,X+a\times\sigma]$, where $X$ is a mean of the multiple pieces of historical data, $\sigma$ is a standard deviation of the multiple pieces of historical data, and $a$ is a tolerance coefficient.

Further, the receiving module 610 is further configured to: receive a data questioning rejected confirmation frame sent by the node device, where the data questioning rejected confirmation frame is used for indicating that the service data is correct; or receive a data questioning accepted confirmation frame sent by the node device, where the data questioning accepted confirmation frame is used for indicating that the service data is erroneous; and receive, by the coordinator, an updated data frame sent by the node device, where the updated data frame includes updated service data.

The coordinator 700 provided in this embodiment may be configured to execute the technical solution of the method embodiment shown in FIG. 2, and may also be configured to execute the solution that is executed on a coordinator side and is in the method embodiment shown in FIG. 4, or FIG. 5A and FIG. 5B. An implementation principle and a technical effect of the coordinator 700 are similar to those of the technical solution, and details are not repeatedly described herein again.

FIG. 8 is a schematic structural diagram of Embodiment 1 of a node device according to the present invention. As shown in FIG. 8, the node device 800 provided in this embodiment may include: an acquiring module 810, a sending module 820, a receiving module 830, and a confirmation module 840.

The acquiring module 810 is configured to acquire service data.

The sending module 820 is configured to send a data frame to a coordinator, where the data frame includes the service data, so that the coordinator determines whether the service data is within a data confidence interval.

The receiving module 830 is configured to receive a questioned-data frame sent by the coordinator, where the questioned-data frame carries the service data.

The confirmation module 840 is configured to confirm correctness of the service data.

Further, the confirmation module 840 is specifically configured to: determine, by means of comparison, whether the service data in the questioned-data frame is the same as the service data in the data frame sent to the coordinator; and if the service data in the questioned-data frame is different from the service data in the data frame sent to the coordinator, resend the service data to the coordinator; or if the service data in the questioned-data frame is the same as the service data in the data frame sent to the coordinator, verify, with a service data sensing apparatus, the correctness of the service data.

The node device 800 provided in this embodiment may be configured to execute the technical solution of the method embodiment shown in FIG. 3, and may also be configured to execute the solution that is executed on a node device side and is in the method embodiment shown in FIG. 4, or FIG. 5A and FIG. 5B. An implementation principle and a technical effect of the node device 800 are similar to those of the technical solution, and details are not repeatedly described herein again.

FIG. 9 is a schematic structural diagram of Embodiment 3 of a coordinator according to the present invention. As shown in FIG. 9, the coordinator 900 provided in this embodiment may include: a receiver 910, a processor 920, and a transmitter 930.

The receiver 910 is configured to receive a data frame sent by a node device, where the data frame includes service data.

The processor 920 is configured to determine whether the service data is within a set data confidence interval.

The transmitter 930 is configured to send, after the processor 920 determines that the service data is beyond a data confidence interval, a questioned-data frame to the node device, where the questioned-data frame carries the service data, so that the node device confirms correctness of the service data.

Further, the processor 920 is further configured to determine the data confidence interval according to historical data having a service type the same as a service type of the service data.

Further, the processor 920 is specifically configured to: extract multiple pieces of historical data, corresponding to a transmission moment in a transmission cycle in which the service data is, within multiple historical transmission cycles preceding the transmission cycle in which the service data is; and determine the data confidence interval according to $[X\text{-}a\times\sigma,X+a\times\sigma]$, where $X$ is a mean of the multiple pieces of historical data, $\sigma$ is a standard deviation of the multiple pieces of historical data, and $a$ is a tolerance coefficient.

Further, the receiver 910 is further configured to: receive a data questioning rejected confirmation frame sent by the node device, where the data questioning rejected confirmation frame is used for indicating that the service data is correct; or receive a data questioning accepted confirmation frame sent by the node device, where the data questioning accepted confirmation frame is used for indicating that the service data is erroneous; and receive, by the coordinator, an updated data frame sent by the node device, where the updated data frame includes updated service data.

The coordinator 900 provided in this embodiment may be configured to execute the technical solution of the method embodiment shown in FIG. 1 or FIG. 2, and may also be configured to execute the solution that is executed on a coordinator side and is in the method embodiment shown in FIG. 4, or FIG. 5A and FIG. 5B. An implementation principle and a technical effect of the coordinator 900 are similar to those of the technical solution, and details are not repeatedly described herein again.

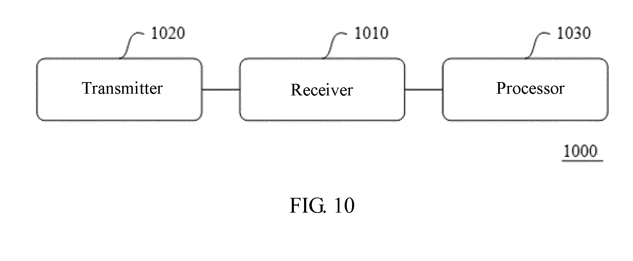

FIG. 10 is a schematic structural diagram of Embodiment 2 of a node device according to the present invention. As shown in FIG. 10, the node device 1000 provided in this embodiment may include: a receiver 1010, a transmitter 1020, and a processor 1030.

The receiver 1010 is configured to acquire service data.

The transmitter 1020 is configured to send a data frame to a coordinator, where the data frame includes the service data, so that the coordinator determines whether the service data is within a data confidence interval.

The receiver 1010 is further configured to receive a questioned-data frame sent by the coordinator, where the questioned-data frame carries the service data.

The processor 1030 is configured to confirm correctness of the service data.

Further, the processor 1030 is specifically configured to: determine, by means of comparison, whether the service data in the questioned-data frame is the same as the service data in the data frame sent to the coordinator; and if the service data in the questioned-data frame is different from the service data in the data frame sent to the coordinator, resend the service data to the coordinator; or if the service data in the questioned-data frame is the same as the service data in the data frame sent to the coordinator, verify, with a service data sensing apparatus, the correctness of the service data.

The node device 1000 provided in this embodiment may be configured to execute the technical solution of the method embodiment shown in FIG. 3, and may also be configured to execute the solution that is executed on a node device side and is in the method embodiment shown in FIG. 4, or FIG. 5A and FIG. 5B. An implementation principle and a technical effect of the node device 1000 are similar to those of the technical solution, and details are not repeatedly described herein again.

According to the embodiments of the present invention, in an actual application scenario, if a node device has a sufficient data storage capability and a sufficient data processing capability and energy is not excessively limited, it may be chosen, according to a situation, that the node device itself determines a data confidence interval of service data by using the foregoing methods, so as to reduce a quantity of times of starting a data retransmission mechanism.

The service data in the embodiments of the present invention is not limited to charging data acquired from "a power meter, a gas meter, or a water meter" either, and may also be service data, provided by a wireless sensor associated with various household electronic devices or a wireless sensor related to environmental monitoring, of various services.

In conclusion, according to the data processing method, the coordinator, and the node device that are provided in the embodiments of the present invention, the coordinator may determine a data confidence interval of service data dynamically according to historical data, determine whether the service data is within the data confidence interval, and if the service data is beyond the data confidence interval, return the service data to a node device for confirmation. Compared with a manner in the prior art in which a coordinator directly accepts service data, the data processing method provided in the embodiments of the present invention meets requirements of a system on data reliability and accuracy. Therefore, with the data accuracy being ensured, the system is prevented from unnecessarily starting retransmission and confirmation mechanisms, so that energy consumption is reduced and channel resources are saved.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of corresponding technical solutions to depart from the scope of the technical solutions of the embodiments of the present invention.

## Claims

1.  A data processing method, comprising:

    receiving, by a coordinator, a data frame sent by a node device, wherein the data frame comprises service data;
    determining, by the coordinator, whether the service data is within a set data confidence interval; and
    if the coordinator determines that the service data is beyond the data confidence interval, sending, by the coordinator, a questioned-data frame to the node device, wherein the questioned-data frame carries the service data, so that the node device confirms correctness of the service data.

2.  The method according to claim 1, wherein before the determining, by the coordinator, whether the service data is within a set data confidence interval, the method further comprises:

    determining, by the coordinator, the data confidence interval according to historical data having a service type the same as a service type of the service data.

3.  The method according to claim 2, wherein the determining, by the coordinator, the data confidence interval according to historical data having a service type the same as a service type of the service data comprises:

    extracting, by the coordinator, multiple pieces of historical data, corresponding to a transmission moment in a transmission cycle in which the service data is, within multiple historical transmission cycles preceding the transmission cycle in which the service data is; and
    determining, by the coordinator, the data confidence interval according to $[X\text{-}a\times\sigma, X\text{+}a\times\sigma]$, wherein $X$ is a mean of the multiple pieces of historical data, $\sigma$ is a standard deviation of the multiple pieces of historical data, and $a$ is a tolerance coefficient.

4.  The method according to any one of claims 1 to 3, wherein after the sending, by the coordinator, a questioned-data frame to the node device, the method further comprises:

    receiving, by the coordinator, a data questioning rejected confirmation frame sent by the node device, wherein the data questioning rejected confirmation frame is used for indicating that the service data is correct; or
    receiving, by the coordinator, a data questioning accepted confirmation frame sent by the node device, wherein the data questioning accepted confirmation frame is used for indicating that the service data is erroneous; and receiving, by the coordinator, an updated data frame sent by the node device, wherein the updated data frame comprises updated service data.

5. A data processing method, comprising:

acquiring, by a node device, service data; sending, by the node device, a data frame to a coordinator, wherein the data frame comprises the service data, so that the coordinator determines whether the service data is within a data confidence interval; receiving, by the node device, a questioned-data frame sent by the coordinator, wherein the questioned-data frame carries the service data; and confirming, by the node device, correctness of the service data.

6. The method according to claim 5, wherein the confirming, by the node device, correctness of the service data comprises:

determining, by the node device by means of comparison, whether the service data in the questioned-data frame is the same as the service data in the data frame sent to the coordinator; and if the service data in the questioned-data frame is different from the service data in the data frame sent to the coordinator, resending the service data to the coordinator; or if the service data in the questioned-data frame is the same as the service data in the data frame sent to the coordinator, verifying, with a service data sensing apparatus, the correctness of the service data.

7. A coordinator, comprising:

a receiving module, configured to receive a data frame sent by a node device, wherein the data frame comprises service data; a judging module, configured to determine whether the service data is within a set data confidence interval; and a sending module, configured to send, after the judging module determines that the service data is beyond the data confidence interval, a questioned-data frame to the node device, wherein the questioned-data frame carries the service data, so that the node device confirms correctness of the service data.

8. The coordinator according to claim 7, further comprising:

a determining module, configured to determine the data confidence interval according to historical data having a service type the same as a service type of the service data.

9. The coordinator according to claim 8, wherein the determining module is specifically configured to:

extract multiple pieces of historical data, corresponding to a transmission moment in a transmission cycle in which the service data is, within multiple historical transmission cycles preceding the transmission cycle in which the service data is; and determine the data confidence interval according to $[X-a \times \sigma, X+a \times \sigma]$, wherein $X$ is a mean of the multiple pieces of historical data, $\sigma$ is a standard deviation of the multiple pieces of historical data, and $a$ is a tolerance coefficient.

10. The coordinator according to any one of claims 7 to 9, wherein the receiving module is further configured to:

receive a data questioning rejected confirmation frame sent by the node device, wherein the data questioning rejected confirmation frame is used for indicating that the service data is correct; or receive a data questioning accepted confirmation frame sent by the node device, wherein the data questioning accepted confirmation frame is used for indicating that the service data is erroneous; and receive, by the coordinator, an updated data frame sent by the node device, wherein the updated data frame comprises updated service data.

11. Anode device, comprising:

an acquiring module, configured to acquire service data; a sending module, configured to send a data frame to a coordinator, wherein the data frame comprises the service data, so that the coordinator determines whether the service data is within a data confidence interval; a receiving module, configured to receive a questioned-data frame sent by the coordinator, wherein the questioned-data frame carries the service data; and a confirmation module, configured to confirm correctness of the service data.

12. The node device according to claim 11, wherein the confirmation module is specifically configured to:

determine, by means of comparison, whether the service data in the questioned-data frame is the same as the service data in the data frame sent to the coordinator; and

if the service data in the questioned-data frame is different from the service data in the data frame sent to the coordinator, resend the service data to the coordinator; or

if the service data in the questioned-data frame is the same as the service data in the data frame sent to the coordinator, verify, with a service data sensing apparatus, the correctness of the service data.

A coordinator receives a data frame sent by a node device, where the data frame includes service data — S110

The coordinator determines whether the service data is within a set data confidence interval — S120

If the coordinator determines that the service data is beyond the data confidence interval, the coordinator sends a questioned-data frame to the node device, where the questioned-data frame carries the service data, so that the node device determines correctness of the service data — S130

FIG. 1

A coordinator receives a data frame sent by a node device, where the data frame includes service data $\quad$ S210

The coordinator determines whether the service data is within a set data confidence interval $\quad$ S220

If the coordinator determines that the service data is beyond the data confidence interval, the coordinator sends a questioned-data frame to the node device, where the questioned-data frame carries the service data, so that the node device determines correctness of the service data $\quad$ S230

S240 $\quad$ The coordinator receives a data questioning rejected confirmation frame sent by the node device, where the data questioning rejected confirmation frame is used for indicating that the service data is correct

The coordinator receives a data questioning accepted confirmation frame sent by the node device, where the data questioning accepted confirmation frame is used for indicating that the service data is erroneous $\quad$ S250

The coordinator receives an updated-data frame sent by the node device, where the updated-data frame includes updated service data $\quad$ S255

FIG. 2

```
┌─────────────────────────────────────────────────┐
│                                                   │  ⌐S310
│          A node device acquires service data      │
│                                                   │
└─────────────────────────────────────────────────┘
                         │
                         ▼
┌─────────────────────────────────────────────────┐
│     The node device sends a data frame to a       │
│     coordinator,                                  │  ⌐S320
│ where the data frame includes the service data,   │
│     so that the                                   │
│ coordinator determines whether the service data   │
│     is within                                     │
│          a data confidence interval               │
└─────────────────────────────────────────────────┘
                         │
                         ▼
┌─────────────────────────────────────────────────┐
│  The node device receives a questioned-data frame │
│     sent                                          │  ⌐S330
│ by the coordinator, where the questioned-data     │
│     frame                                         │
│          carries the service data                 │
└─────────────────────────────────────────────────┘
                         │
                         ▼
┌─────────────────────────────────────────────────┐
│                                                   │  ⌐S340
│ The node device confirms correctness of the       │
│     service data                                  │
│                                                   │
└─────────────────────────────────────────────────┘
```

FIG. 3

Coordinator

Node device

S402: Beacon frame

S404: Data frame (service data)

S406: Common confirmation frame

S408: Acquire a data confidence interval of the service data

S410: Determine whether the service data is within a set data confidence interval

S412: Questioned-data frame (the service data)

S414: Confirm correctness of the service data

S416a: Data questioning rejected confirmation frame

S416b: Data accepted confirmation frame

S418a: Data questioning accepted confirmation frame

S418b: Updated-data frame (updated service data)

FIG. 4

Start

A coordinator broadcasts a beacon frame — S502

A node device sends a data frame (including service data) to the coordinator — S504

The coordinator returns a common confirmation frame to the node device — S506

The coordinator acquires a data confidence interval of the service data — S508

TO
FIG. 5B

FIG. 5A

CONT.
FROM
FIG. 5A

S510

Yes    The coordinator determines
whether the service data is within a set data
confidence interval

No

The coordinator sends a questioned-
data frame (including the service
data) to the node device    S512

The node device
sends an updated-
data frame (including
updated service data)
to the coordinator    S518

S514
The node device determines
whether the service data is correct

No

Yes

The node device
sends a data
questioning accepted
confirmation frame to
the coordinator    S516

The node sends a data questioning
rejected confirmation frame to the
coordinator    S520

The coordinator confirms
acceptance of the service data, and
sends a data accepted confirmation
frame to the node device    S522

End

FIG. 5B

EP 2 966 887 A1

FIG. 6

FIG. 7

FIG. 8

FIG. 9

FIG. 10

# INTERNATIONAL SEARCH REPORT

| International application No. |
|---|
| PCT/CN2014/074317 |

**A. CLASSIFICATION OF SUBJECT MATTER**

H04W 12/10 (2009.01) i; H04W 84/18 (2009.01) n; H04L 29/14 (2006.01) n

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNKI, CNABS, CNTXT: coordinator, service data, confidence, trust, reliable, interval, area, range, doubt, correct, WPAN, wireless personal area network, wireless personal network

GOOGLE, VEN: coordinator, service data, confidence, trust, zone, range, region, interval, area, suspicious, doubt, correct, WPAN, wireless personal area network

**C. DOCUMENTS CONSIDERED TO BE RELEVANT**

| Category* | Citation of document, with indication, where appropriate, of the relevant passages | Relevant to claim No. |
|---|---|---|
| PX | CN 103200058 A (HUAWEI TECHNOLOGIES CO., LTD. et al.), 10 July 2013 (10.07.2013), claims 1-12 | 1-12 |
| A | CN 101267376 A (HARBOUR NETWORKS LTD.), 17 September 2008 (17.09.2008), the whole document | 1-12 |
| A | CN 102210191 A (SIEMENS AG), 05 October 2011 (05.10.2011), the whole document | 1-12 |
| A | CN 101620771 A (SHANDONG JIANZHU UNIVERSITY), 06 January 2010 (06.01.2010), the whole document | 1-12 |
| A | US 2010265923 A1 (ELECTRONICS & TELECOM. RES. INST.), 21 October 2010 (21.10.2010), the whole document | 1-12 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 June 2014 (13.06.2014) | **30 June 2014 (30.06.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **FU, Qi** Telephone No.: (86-10) **62089143** |
|---|---|

Form PCT/ISA/210 (second sheet) (July 2009)

## INTERNATIONAL SEARCH REPORT
### Information on patent family members

International application No.

**PCT/CN2014/074317**

| Patent Documents referred in the Report | Publication Date | Patent Family | Publication Date |
|---|---|---|---|
| CN 103200058 A | 10.07.2013 | None | |
| CN 101267376 A | 17.09.2008 | CN 101267376 B | 04.08.2010 |
| CN 102 210191 A | 05.10.2011 | EP 2184950 B1 | 29.02.2012 |
| | | AT 547918 T | 15.03.2012 |
| | | EP 2184950 A1 | 12.05.2010 |
| | | US 2011211461 A1 | 01.09.2011 |
| | | WO 2010052162 A1 | 14.05.2010 |
| CN 101620771 A | 06.01.2010 | CN 101620771 B | 18.04.2012 |
| US 2010265923 A1 | 21.10.2010 | KR 20100115647 A | 28.10.2010 |
| | | US 8472426 B2 | 25.06.2013 |
| | | KR 101164652 B1 | 11.07.2012 |

Form PCT/ISA/210 (patent family annex) (July 2009)

**EP 2 966 887 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201310104795